# EUROPEAN PATENT APPLICATION

(11) **EP 4 775 622 A1**
(43) Date of publication of application: **15.07.2026**
(21) Application number: 25216216.9
(22) Date of filing: 17.11.2025
(51) Int. Cl.: C08J 9/00, C08J 9/10

(54) **A METHOD OF MAKING A FOAMED ARTICLE**

(30) Priority: 08.01.2025 US 202519014065
(71) Applicant: SAHARA INTERNATIONAL PETROCHEMICAL COMPANY (SIPCHEM), 31952 Al-Khobar (SA)
(72) Inventor: DELFINO, Camillo, 34464 Dhahran (SA)
(74) Representative: Maiwald GmbH

(57) **Abstract**

A method of making a foamed article including mixing a first ethylene vinyl acetate (EVA) copolymer and a thermoset polyurethane to form a composite, mixing the composite, a second EVA copolymer, a compatibilizer, and a foaming agent to form a mixture and forming the foamed article from the mixture. A compression set of the foamed article is 0-100% lower than a compression set of a foamed article made by the same method but without the thermoset polyurethane polymer.

## Description

### BACKGROUND

### TECHNICAL FIELD

The present disclosure is directed to making a foamed article, specifically a foamed article including recycled thermoset polyurethane polymer.

### DESCRIPTION OF RELATED ART

The "background" description provided herein is for the purpose of generally presenting the context of the disclosure. The work of the presently named inventors, to the extent it is described in this background section, as well as aspects of the description which may not otherwise qualify as prior art at the time of filing, are neither expressly or impliedly admitted as prior art against the present invention.

The reuse of polymer waste materials is a way to reduce environmental problems caused by polymeric waste accumulation. Polymers are typically divided into two classes: thermoplastic polymers and thermoset polymers. Thermoplastic polymers become fluid, pliable or moldable at a certain elevated temperature and solidify upon cooling. Whereas thermoset polymers have undergone a vulcanization or cross-linking process resulting in an irreversible hardening and cannot be reformed, which prevents recycling.

Polyurethanes are examples of thermoset polymers which are produced by a cross-linking reaction of polyols with polyisocyanates. Polyurethanes are widely used in different applications such as foams, coatings and adhesives. However, its thermoset characteristics make polyurethane difficult to recycle. Previous studies have aimed to recycle polyurethane by incorporating polyurethane scraps into other polymer formulations such as polyamides, polyesters, or back into polyurethanes. Yet there remains a need for additional methods of recycling thermoset polyurethane.

Ethylene-vinyl acetate (EVA) is a copolymer of ethylene and vinyl acetate. The weight percent of vinyl acetate in most ethylene-vinyl acetate copolymers usually varies from 5 to 40%, with the remainder being ethylene and/or other comonomers. EVA is an elastomeric polymer that has softness and flexibility, and EVA foam is commonly used as padding in equipment, shoes, and yoga mats. However, there remains a need for enhanced EVA properties such as resilience, mechanical toughness such as tear and elongation, compression set, and linear shrinkage.

Accordingly, it is one object of the present disclosure to provide a method for recycling polyurethane, specifically recycling thermoset polyurethane in an ethylene vinyl acetate (EVA) copolymer compound.

### SUMMARY

In an exemplary embodiment a method of making a foamed article is described. The method includes mixing a first ethylene vinyl acetate (EVA) copolymer and a thermoset polyurethane to form a composite, and mixing the composite, a second EVA copolymer, a compatibilizer, and a foaming agent to form a mixture. The method further includes forming the foamed article from the mixture. A compression set of the foamed article is 0-100% lower than a compression set of a foamed article made by the same method but without the thermoset polyurethane polymer.

In some embodiments, the method further includes processing the thermoset polyurethane polymer prior to the mixing with the first EVA copolymer by at least one of mechanical grinding, cryogenic grinding, and waterjet powdering.

In some embodiments, the method further includes processing the thermoset polyurethane polymer prior to the mixing with the first EVA copolymer by at least one of two-roll milling, kneading, and homogenizing in a Banbury mixer.

In some embodiments, the particle size of the thermoset polyurethane polymer is less than 5 mm.

In some embodiments, the thermoset polyurethane polymer is a flexible crosslinked polyurethane foam.

In some embodiments, the mixture includes 1-60 parts of the composite relative to 100 parts of the second EVA copolymer.

In some embodiments, the compatibilizer is at least one selected from the group consisting of a grafted polyolefin and a styrenic block copolymer.

In some embodiments, the mixture includes 1-30 parts of the compatibilizer relative to 100 parts of the second EVA copolymer.

In some embodiments, the mixture further includes a reactive surfactant.

In some embodiments, the first EVA copolymer has a molecular weight of 500-3,000 g/mol and a vinyl acetate content of from 30 to 45 wt %, based on a total weight of the second EVA copolymer.

In some embodiments, the second EVA copolymer has a molecular weight (Mn) of 5,000 to 100,000, preferably20,000- 80,000 or 40,000-70,000 g/mol and a vinyl acetate content of 15 to 30 wt %, based on a total weight of the second EVA copolymer.

In some embodiments, the composite includes 1-50 parts of the first EVA copolymer, relative to 100 parts of the thermoset polyurethane.

In some embodiments, the foaming is done by at least one method, either by injection molding or by compression molding.

In some embodiments, the thermoset polyurethane polymer forms a co-continuous polymer phase with the second EVA copolymer in the foamed article.

In some embodiments, the method further includes heating the mixture to a temperature at which the second EVA copolymer melts and the foaming agent decomposes, thereby producing a foam, that is crosslinked by the decomposition of the peroxide.

In some embodiments, the thermoset polyurethane polymer is waste from injection molding processes.

In some embodiments, a resiliency of the foamed article is 0-100% larger than a resiliency of a foamed article made by the same method but without the thermoset polyurethane polymer.

In some embodiments, an elongation at break of the foamed article is 0-100% larger than a elongation at break of a foamed article made by the same method but without the thermoset polyurethane polymer.

A foamed article produced by the method.

The foregoing general description of the illustrative embodiments and the following detailed description thereof are merely exemplary aspects of the teachings of this disclosure and are not restrictive.

### DETAILED DESCRIPTION

Furthermore, the terms "approximately," "approximate," "about," and similar terms generally refer to ranges that include the identified value within a margin of 20%, 10%, or preferably 5%, and any values therebetween.

Where a numerical limit or range is stated herein, the endpoints are included. Also, all values and subranges within a numerical limit or range are specifically included as if explicitly written out.

As used herein, the term "alkyl" unless otherwise specified refers to both branched and straight chain aliphatic (non-aromatic) hydrocarbons which may be primary, secondary, and/or tertiary hydrocarbons typically having 1 to 32 carbon atoms (e.g., C₁, C₂, C₃, C₄, C₅, C₆, C₇, C₈, C₉, C₁₀, C₁₁, C₁₂, C₁₃, C₁₄, etc.) and specifically includes, but is not limited to, saturated alkyl groups such as methyl, ethyl, propyl, isopropyl, butyl, isobutyl, t-butyl, pentyl, isopentyl, neopentyl, hexyl, isohexyl, 3-methylpentyl, 2,2-dimethylbutyl, 2,3-dimethylbutyl, 2-ethylhexyl, heptyl, octyl, nonyl, 3,7-dimethyloctyl, decyl, undecyl, dodecyl, tridecyl, tetradecyl, pentadecyl, hexadecyl, heptadecyl, octadecyl, nonadecyl, eicosyl, guerbet-type alkyl groups (e.g., 2-methylpentyl, 2-ethylhexyl, 2-proylheptyl, 2-butyloctyl, 2-pentylnonyl, 2-hexyldecyl, 2-heptylundecyl, 2-octyldodecyl, 2-nonyltridecyl, 2-decyltetradecyl, and 2-undecylpentadecyl), as well as unsaturated alkenyl and alkynyl variants such as vinyl, allyl, 1-propenyl, 2-propenyl, 1-butenyl, 2-butenyl, 3-butenyl, 1-pentenyl, 2-pentenyl, 3-pentenyl, 4-pentenyl, 1-hexenyl, 2-hexenyl, 3-hexenyl, 4-hexenyl, 5-hexenyl, oleyl, linoleyl, and the like.

The term "aryl" means a carbocyclic aromatic monocyclic group containing 6 carbon atoms which may be further fused to a second 5- or 6-membered carbocyclic group which may be aromatic, saturated or unsaturated. Aryl includes, but is not limited to, phenyl, anthracenyl, indanyl, 1-naphthyl, 2-naphthyl, and tetrahydronaphthyl. The fused aryls may be connected to another group either at a suitable position on the cycloalkyl/cycloalkenyl ring or the aromatic ring.

As used herein, the term "substituted" refers to at least one hydrogen atom that is replaced with a non-hydrogen group, provided that normal valencies are maintained and that the substitution results in a stable compound. When a substituent is noted as "optionally substituted", the substituent(s) are selected from alkyl, halo (e.g., chloro, bromo, iodo, fluoro), hydroxyl, alkoxy, oxo, alkanoyl, aryloxy, alkanoyloxy, amino (-NH₂), alkylamino (-NHalkyl), cycloalkylamino (-NHcycloalkyl), arylamino (-NHaryl), arylalkylamino (-NHarylalkyl), disubstituted amino (e.g., in which the two amino substituents are selected from alkyl, aryl or arylalkyl, including substituted variants thereof, with specific mention being made to dimethylamino), alkanoylamino, aroylamino, arylalkanoylamino, thiol, alkylthio, arylthio, arylalkylthio, alkylthiono, arylthiono, arylalkylthiono, alkylsulfonyl, arylsulfonyl, arylalkylsulfonyl, sulfonamide (e.g., -SO₂NH₂), substituted sulfonamide (e.g., -SO₂NHalkyl, -SO₂NHaryl, -SO₂NHarylalkyl, or cases where there are two substituents on one nitrogen selected from alkyl, aryl, or alkylalkyl), nitro, cyano, carboxy, unsubstituted amide (i.e. - CONH₂), substituted amide (e.g., -CONHalkyl, -CONHaryl, -CONHarylalkyl or cases where there are two substituents on one nitrogen selected from alkyl, aryl, or alkylalkyl), alkoxycarbonyl, aryl, guanidine, heterocyclyl (e.g., pyridyl, furyl, morpholinyl, pyrrolidinyl, piperazinyl, indolyl, imidazolyl, thienyl, thiazolyl, pyrrolidyl, pyrimidyl, piperidinyl, homopiperazinyl), and mixtures thereof. The substituents may themselves be optionally substituted, and may be either unprotected, or protected as necessary, as known to those skilled in the art, for example, as taught in Greene, et al., "Protective Groups in Organic Synthesis", John Wiley and Sons, Second Edition, 1991, hereby incorporated by reference in its entirety.

As used herein, the term "thermoset polymer" refers to a polymer that cannot be heated and melted. The thermoset polymer is generally prepared by reaction of polymeric units with a crosslinking or curing agent. The crosslinking may be induced by energy, such as heat, through a chemical reaction (by reaction with a curing agent), or by irradiation. The crosslinking or curing results in a polymer which remains rigid when set and does not soften with heating.

The term "thermoset polyurethane" refers to a material prepared by reaction of a diisocyanate with a polyol, and a curing agent (e.g., a monomer that has a reactive functionality higher than 2). Preferably the thermoset polyurethane is an elastomeric closed cell material formed from a diol component that has glycerine branches and/or a polydiethylene adipate with a molecular weight of 2,000-4000, preferably about 2,600, such as ELASTOPAN ES 7309/159 BASF, and an aromatic isocyanate component such as Lupranate ES 187/26 C-B (e.g., MDI). Other isocyanates such as toluene diisocyanate (TDI) and aliphatic isocyanates may be used in the alternate or in combination. Sources of the thermoset polyurethane include waste derived from shoe soles, especially safety shoes.

The PU preferably does not include open cell material. Open cell PU materials, for example from mattresses, are characterized by lower density. While compatibilization is at least partially effective, less dense PU foams tend to micronize. Higher density closed cell thermoset PU foams minimize or eliminate micronization.

The compatibilizer functions to permit improved dispersion and adhesion of the PU particles to the EVA matrix. PU/EVA mixtures that do not contain a compatibilizer lead to separation of PU particles from the EVA matrix.

Aspects of the present disclosure are directed to a method of making a foamed article with a mixture comprising an ethylene vinyl acetate (EVA) copolymer, a thermoset polyurethane polymer, a compatibilizer, and a foaming agent. The foamed article incorporates a waste thermoset polyurethane polymer thereby providing a method of recycling thermoset polyurethane. The foamed article incorporating the waste thermoset polyurethane polymer has improved properties compared to a foamed article made from an EVA copolymer without the waste thermoset polyurethane polymer.

### Ethylene vinyl acetate copolymer

Ethylene-vinyl acetate (EVA) copolymer is a copolymer of ethylene and vinyl acetate where the weight percentage of ethylene in the polymer molecule exceeds that of the vinyl acetate. As shown in Formula (I), the EVA includes n number of ethylene units and m number of vinyl acetate units, where n and m depend on the amount of vinyl acetate included and the overall molecular weight of the EVA copolymer.

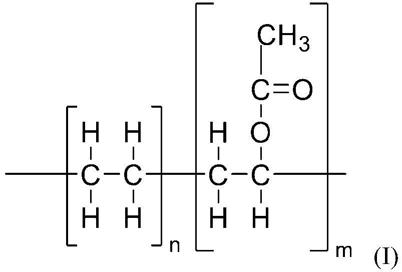

An EVA copolymer having up to 4 wt.% of VA is referred to as vinyl acetate modified polyethylene. It is processed as a thermoplastic material and has softness and flexibility. An EVA copolymer, having 4 to 30 wt.% VA is referred to as thermoplastic ethylene-vinyl acetate copolymer and is a thermoplastic elastomer material. It is not vulcanized but has some of the properties of a rubber or of plasticized polyvinyl chloride particularly at the higher end of the range.

In some embodiments, a first EVA copolymer has a low molecular weight and high VA content. The first EVA copolymer may act as a compatibilizer to improve the compatibility of the polyurethane with a second EVA copolymer in the foamed article, as will be discussed later. In a preferred embodiment, the first EVA copolymer has a VA content of 30 to 45 wt %, preferably 35-40 wt.%, or about 37 wt.% vinyl acetate, based on a total weight of the first EVA copolymer. In an embodiment, the first EVA copolymer has a molecular weight of 500-10,000 g/mol, preferably 1,000-9,000 g/mol, 2,000-8,000 g/mol, 4,000-7,000 g/mol, or about 5,000-6,000 g/mol. In a preferred embodiment, the first EVA copolymer has a melting point of 50-100 °C, preferably 60-90 °C, or 70-80 °C.

In some embodiments, a second EVA copolymer has a higher molecular weight and rigidity than the first EVA copolymer and is used to produce the foamed article. In some embodiments, the second EVA copolymer has a molecular weight of 10,000-100,000 g/mol, preferably 20,000-90,000 g/mol, 30,000-80,000 g/mol, 40,000-70,000 g/mol, or about 50,000-60,000 g/mol. In some embodiments, the second EVA copolymer includes 15 to 30 wt.% vinyl acetate, preferably 20-24 wt.%, or about 22 wt.% vinyl acetate. In a preferred embodiment, the second EVA copolymer has a melting point of 70-120 °C, preferably 80-110 °C, or 90-100 °C.

### Polyurethane

In some embodiments, the polyurethanes are produced by polymerizing one or more isocyanates with one or more polyols to produce polymer chains having carbamate linkages (-N(CO)O-) as shown in Formula II. 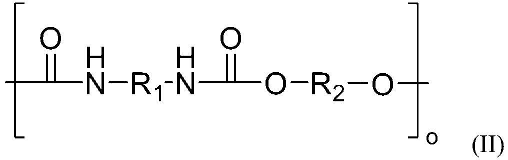 R₁ and R₂ each independently represent an optionally substituted aliphatic or aryl group. In some embodiments, R₁ and R₂ each independently represent a linear or branched aliphatic group having from 2 to 20, preferably 4-18, 6-16, 8-14, or 10-12 carbon atoms or an optionally substituted aryl group having from 2 to 20, preferably 4-18, 6-16, 8-14, or 10-12 carbon atoms. In some embodiments, R₁ and R₂ are based on the one or more isocyanates and polyols used in the production of the polyurethane. The number of repeating units (o) depends on the method of making and the overall molecular weight of the polymer.

In a preferred embodiment, the one or more isocyanates each include two or more isocyanate (-NCO) groups per molecule, preferably 2, 3, or 4 isocyanate groups per molecule. Examples of suitable isocyanates include the following: trimethylene diisocyanate, tetramethylene diisocyanate, pentamethylene diisocyanate, hexamethylene diisocyanate, ethylene diisocyanate, diethylidene diisocyanate, propylene diisocyanate, butylene diisocyanate, bitolylene diisocyanate, tolidine isocyanate, isophorone diisocyanate, dimeryl diisocyanate, dodecane-1,12-diisocyanate, 1,3-bis (isocyanato-methyl)cyclohexane, 1,6-diisocyanato-2,2,4,4-tetra-methylhexane, 1,6-diisocyanato-2,4,4-tetra-trimethylhexane, 2,2,4-trimethyl hexamethylene diisocyanate, dodecamethylene diisocyanate, 1,3cyclopentane diisocyanate, 1,3-cyclohexane diisocyanate, 1,3-cyclobutane diisocyanate, 1,4-cyclohexane diisocyanate, trans-cyclohexane-1,4-diisocyanate, 3-isocyanato-methyl-3,5,5-trimethylcyclohexyl isocyanate, 1-isocyanato-3,3,5-trimethyl-5-isocyanatomethylcyclohexane, cyclohexyl isocyanate, dicyclohexylmethane 4,4'-diisocyanate, 1,4-bis(isocyanatomethyl) cyclohexane, m-phenylene diisocyanate, 1,10-decamethylene diisocyanate, cyclohexylene-1,2-diisocyanate, 1-chlorobenzene-2,4-diisocyanate, furfurylidene diisocyanate, 2,4,4-trimethyl hexamethylene diisocyanate, 4,4'-methylenebis(cyclohexyl isocyanate), 4,4'-methylenebis(phenyl isocyanate), 1-methyl-2,4-cyclohexane diisocyanate, 1-methyl-2,6-cyclohexane diisocyanate, 1,5-tetrahydronaphthalene diisocyanate, meta-xylene diisocyanate, 2,4-toluene diisocyanate, 2,4'-diphenylmethane diisocyanate, 2,4-chlorophenylene diisocyanate, 4,4'-diphenylmethane diisocyanate, p,p'-diphenylmethane diisocyanate, m-xylylene diisocyanate, m-tetramethylxylylene diisocyanate, p-phenylene diisocyanate, p,p'-biphenyl diisocyanate, 3,3'-dimethyl-4,4'-biphenylene diisocyanate, 3,3'-dimethoxy-4,4'-biphenylene diisocyanate, 3,3'-diphenyl-4,4'-biphenylene diisocyanate, 4,4'-biphenylene diisocyanate, 3,3'-dichloro-4,4'-biphenylene diisocyanate, 1,5-naphthalene diisocyanate, 4-chloro-1,3-phenylene diisocyanate2,4-tolylene diisocyanate, 2,6-tolylene diisocyanate, 2,2-diphenylpropane-4,4'-diisocyanate, 4,4'-toluidine diisocyanate, dianisidine diisocyanate, 4,4'-diphenyl ether diisocyanate, 1,3-xylylene diisocyanate, 1,4-naphthylene diisocyanate, azobenzene-4,4'-diisocyanate, diphenyl sulfone-4,4'-diisocyanate, triphenylmethane 4,4',4"-triisocyanate, isocyanatoethyl methacrylate, 3-isopropenyl-α,α-dimethylbenzyl-isocyanate, dichlorohexamethylene diisocyanate, ω, ω'-diisocyanato-1,4-diethylbenzene, polymethylene polyphenylene polyisocyanate, polybutylene diisocyanate, isocyanurate modified compounds, carbodiimide modified compounds, and mixtures thereof.

In a preferred embodiment, the one or more polyols each include two or more hydroxyl (-OH) groups per molecule, preferably 2, 3, or 4 hydroxyl groups per molecule. Types of polyols include polyester polyols, polyether polyols, and polycarbonate polyols. Polyether polyols are made by the reaction of epoxides with compounds having active hydrogen atom. Polyester polyols are made by the polycondensation reaction of multifunctional carboxylic acids and polyhydroxyl compounds. Polycarbonate polyols are obtained by the condensation of a polyol with phosgene, chloroformic acid ester, dialkyl carbonate or diallyl carbonate.

Polyether polyols include but are not limited to polyethylene glycol (PEG), polypropylene glycol (PPG) and polytetrahydrofuran.

Examples of polyester polyols include but are not limited to poly(ethylene adipate) (PEA), poly(diethylene adipate) (PDA), poly(propylene adipate) (PPA), poly(tetramethylene adipate) (PBA), poly(hexamethylene adipate) (PHA), poly(neopentylene adipate) (PNA), polyols composed of 3-methyl-1,5-pentanediol and adipic acid, random copolymer of PEA and PDA, random copolymer of PEA and PPA, random copolymer of PEA and PBA, random copolymer of PHA and PNA, caprolactone polyol obtained by the ring-opening polymerization of ε-caprolactone, and polyol obtained by opening the ring of β-methyl-δ-valerolactone with ethylene glycol can be used either alone or in a combination thereof. Additionally, polyester polyol may be composed of a copolymer of at least one of the following acids and at least one of the following glycols. The acids include terephthalic acid, isophthalic acid, phthalic anhydride, oxalic acid, malonic acid, succinic acid, pentanedioic acid, hexanedioic acid, octanedioic acid, nonanedioic acid, adipic acid, azelaic acid, sebacic acid, dodecanedioic acid, dimer acid (a mixture), p-hydroxybenzoate, trimellitic anhydride, ε-caprolactone, and β-methyl-δ-valerolactone. The glycols include ethylene glycol, propylene glycol, butylene glycol, pentylene glycol, 1,4-butanediol, 1,5-pentanediol, 1,6-hexanediol, neopentylene glycol, polyethylene glycol, polytetramethylene glycol, 1,4-cyclohexane dimethanol, pentaerythritol, and 3-methyl-1,5-pentanediol.

In an embodiment, a polycarbonate polyol contains a polyol component using 1,6-hexanediol, 1,4-butanediol, 1,3-butanediol, neopentylglycol or 1,5-pentanediol. Polybutadiene polyols include butadiene homopolymer, isoprene homopolymer, butadiene-styrene copolymer, butadiene-isoprene copolymer, butadiene-acrylonitrile copolymer, butadiene-2-ethyl hexyl acrylate copolymer, and butadiene-n-octadecyl acrylate copolymer.

In some embodiments, the polyurethane further includes chain extenders. Non-limiting examples of these extenders include polyols, polyamine compounds, and mixtures of these. Polyol extenders may be primary, secondary, or tertiary polyols. Specific examples of monomers of these polyols include: trimethylolpropane (TMP), ethylene glycol, 1,3-propanediol, 1,4-butanediol, 1,5-pentanediol, 1,6-hexanediol, propylene glycol, dipropylene glycol, 1,2-butanediol, 1,3-butanediol, 2,3-butanediol, 1,2-pentanediol, 2,3-pentanediol, 2,5-hexanediol, 2,4-hexanediol, 2-ethyl-1,3-hexanediol, cyclohexanediol, and 2-ethyl-2-(hydroxymethyl)-1,3-propanediol.

In a preferred embodiment, the polyurethane is a thermoset polyurethane. In some embodiments, the thermoset polyurethane is at least partially crosslinked. The polyurethane can be physically crosslinked to another polyurethane chain through e.g., nonpolar or polar interactions between the urethane or carbamate groups of the polymers.

In a preferred embodiment, the thermoset polyurethane is waste. The waste may be from any process including the manufacturing and use of a thermoset polyurethane, including but not limited to building and construction, transportation, furniture and bedding, appliances, packaging, textiles, fibers and apparel, machinery and foundry, electronics, and footwear. In a preferred embodiment, the thermoset polyurethane polymer is waste from injection molding processes. In a preferred embodiment, the polyurethane is a waste from the automotive industry. Automotive seating is a large market for flexible foams.

In some embodiments, the thermoset polyurethane polymer is a flexible crosslinked polyurethane foam. Flexible polyurethane foams have an open-cell structure. In some embodiments, flexible crosslinked polyurethane foam has an apparent density of 10 to 120 kg/m³, preferably 20-110 kg/m³, 30-100 kg/m³, 40-90 kg/m³, 50-80 kg/m³, or about 60-70 kg/m³.

In a preferred embodiment, the polyurethane is in form of ground material, preferably with at least a portion of the particles having a particle size from 1 to 5 mm, preferably 2-4 mm, or about 3 mm. Particularly preferred PU particles have an average size of 5 to 500 um, preferably less than 200 um, more preferably less than 100 um. PU particles sizes in a range of 5-100 um may be especially well suited for providing higher surface area compatibilization. In some embodiments, the polyurethane is ground by at least one of the following mechanical grinding, cryogenic grinding, and waterjet powdering. Mechanical grinding typically involves a machining process which uses a grinding wheel as cutting tool to form smaller pieces of a material. In another embodiment, the polyurethane is manually cut into smaller pieces. Cryogenic grinding typically includes cooling or chilling a material and then grinding it into a small particle size. Waterjet powdering is an industrial tool using an extremely high-pressure jet of water, or a mixture of water and an abrasive substance to cut a material.

In an embodiment, the polyurethane has a molecular weight of 1,000-10,000 g/mol, preferably 2,000-9,000 g/mol, 3,000-8,000 g/mol, 4,000-7,000 g/mol, or about 5,000-6,000 g/mol.

In some embodiments, the polyurethane is further processed by at least one of two-roll milling, kneading, and homogenizing in a Banbury mixer. In some embodiments, the further processing may be before and/or after the polyurethane is made into a ground material. The further processing ensures a uniform particle shape and distribution of the polyurethane particles.

### Compatibilizer

A compatibilizer promotes combining incompatible blending by physical or chemical means so as to obtain a stable composite. For blended composites, phase separation occurs due to differences in chemical structure, polarity, molecular weight (viscosity), and crystallinity between the components, resulting in poor performance. A compatibilizer results in two effects when used in mixtures (composites) of two or more dissimilar materials: 1) reduces the surface energy between the phases of the composite and 2) chemically and/or mechanically links, preferably by covalent and/or ionic bonding, the phases of the composite together in order to give strength to the composite. Thus, compatibilizers typically have two distinct molecular domains (e.g., moieties), where one domain is compatible with a first component (e.g., a nonpolar polymer material) of the composite, and the other domain is compatible with a second component (e.g., a polar polymer or phase) of the composite. In a preferred embodiment, the use of the compatibilizer results in a co-continuous phase between the components of the composite.

For composite systems containing reactive groups (e.g., mixtures containing one or more polymers that contain chemical functionalities that may undergo chemical reaction under mild conditions), reactive compatibilizers are often used. Examples of reactive compatibilizers are grafted polyolefins, which are produced by grafting functional groups such acrylates, methacrylates, styrenes, vinyl acetates, vinyl chlorides, vinylidene chlorides, maleic anhydrides, itaconic acids, acrylonitriles, ethylene glycol dimethacrylates, anionic and nonionic surfactants onto a polyolefin. Examples of polyolefins include polyethylene, polypropylene (PP), and polyputylene. Examples of grafted polyolefins include PP grafted maleic anhydride, styrene grafted maleic anhydride, and acrylonitrile butadiene styrene grafted maleic anhydride. In these cases, the maleated ends of the compatibilizer are reactive with and compatible with the polar phase of the composite, and the polyolefin domain is compatible with and sufficiently long to chain entangle with the nonpolar phase of the composite material.

In a preferred embodiment, the grafted polyolefin may be used in combination with an anionic and/or nonionic surfactant. Examples of nonionic surfactants include but are not limited to alkyl polyglycoside, cetostearyl alcohol, cetyl alcohol, decyl glucoside, glycerol monostearate, lauryl glucoside, octyl glucoside, oleyl alcohol, pentaethylene glycol monododecyl ether, polidocanol, poloxamer, polysorbate, sorbitan, and stearyl alcohol. Examples of anionic surfactants include but are not limited to 2-acrylamido-2-methylpropane sulfonic acid, alkylbenzene sulfonate, ammonium lauryl sulfate, ammonium perfluorononanoate, chlorosulfolipid, perfluorobutanesulfonic acid, perfluorodecanoic acid, perfluorohexanesulfonic acid, perfluorononanoic acid, perfluorooctanesulfonic acid, perfluorooctanoic acid, perfluoropropanesulfonic acid, phospholipid, potassium lauryl sulfate, sodium dodecyl sulfate, sodium laurate, sodium laureth sulfate, sodium lauroyl sarcosinate, sodium myreth sulfate, sodium nonanoyloxybenzenesulfonate, sodium pareth sulfate, sodium stearate, sodium sulfosuccinate esters, and sodium tetradecyl sulfate.

Other examples of compatibilizers include a styrenic block copolymer where the styrene is in a block copolymer with a unit having a nucleophilic functional group, for example, a methacrylate-terminated reactive polystyrene and polystyrene/poly(methyl methacrylate).

In some embodiments, the compatibilizer is included in the mixture in an amount of 1-30 parts preferably 5-25 parts, 10-20 parts, or about 20 parts, relative to 100 parts of the second EVA copolymer.

### Foaming Agent

A foaming agent is a material such as a surfactant or a blowing agent that facilitates the formation of foam. A surfactant reduces surface tension of a liquid or increases its colloidal stability by inhibiting coalescence of bubbles. A blowing agent is a gas (or precursor compound that forms a gas upon decomposition or reaction) that forms the gaseous part (vacancies or cellular voids) of the foam. Examples of foaming agents include but are not limited to sodium laureth sulfate, sodium lauryl ether sulfate (SLES), sodium lauryl sulfate, and ammonium lauryl sulfate (ALS).

There are two main types of blowing agents: gases at the temperature that the foam is formed, and gases generated by chemical reaction. Carbon dioxide, pentane, and chlorofluorocarbons are examples of the former. Blowing agents that produce gas via chemical reactions, which is preferred in the present disclosure, include but are not limited to azodicarbonamide, 2,2'-azobisisobutynotrile, azohexahydrobenzonitrile, diazodiaminobenzene, and other azo compounds; benzenesulfonylhydrazide, benzene-1,3-sulfonylhydrazide, diphenylsulfone-3,3'-disulfonylhydrazide, diphenyloxide-4,4'-disulfonylhydrazide, 4,4'-oxybis(benzenesulfonyl hydrazide), p-toluenesulfonylhydrazide, and other sulfonylhydrazide compounds; terephthalazide, p-t-butylbenzazide, and other azide compounds; and sodium bicarbonate, ammonium bicarbonate, ammonium carbonate, and other carbonate compounds.

Other examples include exothermic materials such as azodicarbonic acid diamide, p-toluenesulphonic acid hydrazide, 4,4'-oxybis(benzenesulphonic acid hydrazide), or endothermic materials such as sodium bicarbonate, citric acid/sodium bicarbonate combinations, and zinc carbonate. A foaming auxiliary can be used to lower the decomposition temperature of the blowing agent. Non-limiting examples include zinc white, zinc oxide, zinc stearate, zinc nitrate, zinc phthalate, zinc carbonate, phosphorous trichloride salt, tribasic zinc sulfate, and other inorganic salts; zinc fatty acid soaps, lead fatty acid soaps, cadmium fatty acid soaps, and other metal soaps; boric acid, oxalic acid, succinic acid, adipic acid, and other acids; urea, ethanolamine, glucose, glycerin, and the like.

In some embodiments, the foaming agent is included in the mixture in an amount of 1-10 parts preferably 2-9 parts, 3-8 parts, 4-7 parts, or 5-6 parts, relative to 100 parts of the second EVA copolymer.

### Other components

In some embodiments, other components are included in the mixture in the method of making the foamed article. In some embodiments, the mixture includes a peroxide as a crosslinking agent. Under the temperature conditions of the reaction, the peroxides are activated to begin the process of crosslinking by extracting a hydrogen atom from the polymer backbone and providing sites for crosslinking. Crosslinking the foam in this way during the foaming operation leads to foamed articles having improved physical properties. The nature and the level of the peroxide crosslinking agent is selected to provide suitable foaming and crosslinking in conjunction with the foaming agent. Examples of peroxides include but are not limited to dicumyl peroxide include α,α'-di-(t-butylperoxy)diisopropylbenzene; 2,5-dimethyl-2,5-di-(t-butylperoxy)hexane; 2,5-dimethyl-2,5-di-(t-butylperoxy)hexyne-3; n-butyl 4,4-di-(t-butylperoxy)-valerate; 1,1-bis-(t-butylperoxy)-3,3,5-trimethylcyclohexane; and t-butyl perbenzoate. In some embodiments, the peroxide is included in an amount of 0.1 to 5 parts, preferably 1-4 parts, or 2-3 parts relative to 100 parts of the second EVA copolymer.

Non-limiting examples of other components, or processing aids, include inorganic fillers, pigments, fire retardants, lubricants, activators, and the like. Examples of inorganic fillers include talc, magnesium carbonate, magnesium silicate, calcium carbonate, clay, mica, bearing sulfate, magnesium hydroxide, and the like.

In some embodiments, the inorganic filler is included in the mixture in an amount of 1-50 parts preferably 10-40 parts, 20-30 parts, or about 25 parts, relative to 100 parts of the second EVA copolymer. In some embodiments, the pigment is included in the mixture in an amount of 1-10 parts preferably 2-9 parts, 3-8 parts, 4-7 parts, or 5-6 parts relative to 100 parts of the second EVA copolymer.

In a preferred embodiment, the mixture includes a reactive surfactant. A reactive surfactant is an amphiphilic molecule with an additional functionality that provides it with chemical reactivity capable of forming covalent bonds. Reactive surfactants are categorized into three groups based on participation in one of the chemical reactions involved in the polymerization process, 1) as inisurf when the reaction is the initiation of the polymerization, 2) as surfmer when it is the propagation, and 3) even as transurf for a transfer reaction. In a preferred embodiment, the reactive surfactant in a surfmer including a hydrophobic moiety, a hydrophilic moiety and a polymerizable moiety or the additional functionality. In a preferred embodiment, the additional functionality that provides it with chemical reactivity is a meth(acrylate) ester or a terminal olefin. The hydrophobic moiety is a hydrocarbon chain, polysiloxane, polycaprolactone, or poly(propylene oxide). The hydrophilic moieties phosphates, sulphates, or carboxylates (anionic) or quaternary ammonium salts (cationic). In some embodiments, the reactive surfactant is included in the mixture in an amount of 1-50 parts preferably 10-40 parts, 20-30 parts, or about 25 parts, relative to 100 parts of the second EVA copolymer. The reactive surfactant is thought to further improve the compatibility of the EVA copolymer with the thermoset polyurethane polymer.

### Method of making the foamed article

The foamed article may be obtained by the process described below, for example. The order of the steps is not intended to limit the scope of the disclosure. The method includes mixing a first ethylene vinyl acetate (EVA) copolymer and a thermoset polyurethane to form a composite, mixing the composite, a second EVA copolymer, a compatibilizer, and a foaming agent to form a mixture, and forming the foamed article from the mixture.

The PU may be added directly (e.g., concurrently) to the EVA compound with the compatibilizer, or via a two-step process which utilizes a PU, PU/compatibilizer, PU/EVA or EVA/compatibilizer masterbatch. The masterbatch is added to a foamable compound formulation that contains EVA, and optionally fillers, blowing agents and crosslinking agents and color masterbatch if required. Foamable compositions are preferably prepared in Banbury mixers or kneaders, and can also include a two-roll mill mixing step. Typically a PU/EVA masterbatch is prepared in a kneader at a temperature from 85 to 160°C, or in a Gelimat also at a temperature from 85 to 160°C. If a crosslinking agent is present, e.g., a dialkyl or diaryl organic peroxide such as dicumyl peroxide, the compounding temperature preferably does not exceed 120°C. If a blowing agent is present temperature preferably does not exceed 150°C. During the processing of preparations that contain only pre-blend EVA, PU scrap and compatibilizer, the temperature can be raised up to 180°C.

In some embodiments, prior to the mixing with the first EVA copolymer the method further includes processing the thermoset polyurethane polymer by at least one of mechanical grinding, cryogenic grinding, and waterjet powdering. In some embodiments, prior to the mixing the method further includes processing the thermoset polyurethane polymer by at least one of two-roll milling, kneading, and homogenizing in a Banbury mixer. These processes form a uniform particle size and shape of the thermoset polyurethane polymer for incorporation into the foamed article.

The mixing of the first EVA copolymer and the thermoset polyurethane forms a composite. As the first EVA copolymer has a high vinyl acetate content and low molecular weight, the first EVA copolymer can penetrate into and/or between the crosslinked units of the thermoset polyurethane. In other words, the first EVA copolymer, e.g., a discontinuous EVA copolymer phase, is interspersed within the crosslinked units of the thermoset polyurethane. This arrangement allows for an initial compatibilization between the polyurethane and the first EVA copolymer and prevents or inhibits the formation of islands or phase segregation of the EVA and the polyurethane in the composite and in the resulting foamed articles. In other embodiments the compatibilizer functions to increase the PU particle surface adhesion to the EVA matrix without physical penetration of the compatibilizer into the PU particles. Phase segregation may be present. However, an increased surface adhesion between the PU particles and the EVA matrix permits the mixture to behave and perform as a composite, not a miscible blend, without EVA swelling due to the PU particles.

In an embodiment, the first EVA copolymer and the thermoset polyurethane in the composite are not covalently bonded. In an embodiment, the first EVA copolymer and the thermoset polyurethane interact through Van der Waals forces and hydrogen bonding. In a preferred embodiment, the vinyl acetate units of the first EVA copolymer interact with the amines of the polyurethane through hydrogen bonding. In a preferred embodiment, the first EVA copolymer has a higher content of VA than the second EVA copolymer to encourage penetration of the first EVA copolymer within the crosslinked units of the polyurethane and promote hydrogen bonding. In some embodiments, a portion of the ethylene units of the first EVA copolymer do not fully penetrate between the crosslinked units of the polyurethane, thereby allowing the ethylene units to interact with the ethylene units of the second EVA copolymer in the following step. In other words, the first EVA copolymer acts as a bridge to compatibilize the polyurethane and the second EVA copolymer.

In a preferred embodiment, the mixing of the first EVA copolymer and the thermoset polyurethane is performed at a temperature higher than the melting point of the first EVA copolymer. Therefore, the particles of the polyurethane are dispersed in a molten first EVA copolymer. In a preferred embodiment, the mixing includes a kneading process, thereby promoting the penetration or diffusion of the first EVA copolymer within the polyurethane.

In some embodiments, the composite includes 1-50 parts, preferably 5-45 parts, 10-40 parts, 15-35 parts, or 20-30 parts of the first EVA copolymer, relative to 100 parts of the thermoset polyurethane. In a preferred embodiment, the composite is then added into the molten mixture of the first EVA copolymer and the polyurethane in an amount of 1-60 parts, preferably 5-55 parts, 10-50 parts, 15-45 parts, 20-40 parts, or 25-35 parts relative to 100 parts of the second EVA copolymer.

The mixing of the composite, a second EVA copolymer, a compatibilizer, and a foaming agent may be performed by at least one of two-roll milling, kneading, and homogenizing in a Banbury mixer, preferably in a molten state. In a preferred embodiment, the mixing is at a temperature below the activation point of the foaming agent. In a preferred embodiment, the mixing results in a homogeneous mixture. In an alternative embodiment, the mixing is in a continuous mixing extruder. Instead of batching in discrete lots, this method meters ingredients into an extruder that mixes them continuously to the final compounded pellets.

In an alternative embodiment, prior to the mixing of the composite, the second EVA copolymer, the compatibilizer, and the foaming agent, the second EVA copolymer is dissolved in a solvent. The solvent is suitable to dissolve the second EVA copolymer, such as but not limited to toluene, tetrahydrofuran or dichloromethane. The solvent cannot dissolve the thermoset polyurethane polymer. In a preferred embodiment, the dissolved second EVA copolymer and the thermoset polyurethane are mixed and the solvent is immediately evaporated by any method known in the art. This results in the second EVA copolymer forming a matrix surrounding the thermoset polyurethane polymer particles. In a preferred embodiment, the thermoset polyurethane polymer particles are encapsulated by the second EVA copolymer prior to the forming the foamed article. In the encapsulation, the ethylene units of the first EVA copolymer interact with the ethylene units of the second EVA copolymer, thereby forming a strengthened structure.

In an embodiment, the mixture is then used to form a foamed article. In some embodiments, the foamed article is included in a material selected from but not limited to footwear insoles, gaskets, expansion joints, exercise mats, wakeboard boots, waterski boots, backpack and shoulder bag straps, packaging foam, helmets and gloves, fishing rods, biomedical drug delivery, hockey pads, bicycle saddles, orthotic supports, vehicle headliners and life jackets.

In some embodiments, the forming and foaming is done by at least one process, either injection molding or compression molding. The compression molding process includes filling a preheated mold with the mixture. The shape of the mold is based on the type of article to be formed as previously described. Then pressure is applied to the mixture allowing foaming and curing to take place (i.e., decomposition of the foaming agent and/or the cross-linking agent), and subsequently releasing the pressure to allow the foamed article to simultaneously expand and cure. Curing preferably occurs simultaneously with the gas release, before pressure release. When pressure is released the article is preferably already cured, just the expansion and foam size stabilization happens while cooling. In some embodiments, blowing/foaming agent activates/decomposes at high temperatures and mixture is placed into a mold, which is then sealed, pressurized, and heated to activate the foaming agent and the crosslinking agent. In so doing, the blowing/foaming agent foams and (the gas is dissolved in the matrix that already filled the cavity, you cannot have voids in the cavity prior to gas release). In some embodiments, the temperature also melts the second EVA copolymer, but does not melt the thermoset polyurethane polymer, and the particles of the thermoset polyurethane polymer are uniformly dispersed in the melted second EVA copolymer. In a preferred embodiment, the thermoset polyurethane polymer forms a co-continuous polymer phase with the second EVA copolymer in the foamed article. In other words, the second EVA copolymer and thermoset polyurethane polymer are interspersed and do not form segregated phases.

In the injection molding process, the mixture is injected, under pressure, into a mold that is suitable for forming the foamed article. Due to increased temperatures within the mold, the foaming agent activates, which becomes entrained with high-pressure bubbles (gas is dissolved in the polymer matrix, and bubbles grow as the pressure is released when the mold opens). The mold is then opened, preferably when hot, for free hot expansion (e.g., at a mold temperature of from 150 to 190°C) and unsealed; when the mold is opened, these bubbles rapidly expand to enlarge the mixture. In some embodiments, the temperature also melts the second EVA copolymer, but does not melt the thermoset polyurethane polymer, and the particles of the thermoset polyurethane polymer are uniformly dispersed in the melted second EVA copolymer. In a preferred embodiment, the thermoset polyurethane polymer forms a co-continuous polymer phase with the second EVA copolymer in the foamed article. In other words, the second EVA copolymer and thermoset polyurethane polymer are interspersed and do not form segregated phases.

In some embodiments, the foamed article has improved properties compared to a foamed article made by a same method but that does not include the thermoset polyurethane polymer. As the recycled thermoset polyurethane polymer is uniformly dispersed in foamed article it provides strengthening properties.

In some embodiments, a compression set of the foamed article is 0-100% lower, preferably 90% lower, 80% lower, 70% lower, 60% lower, 50% lower, 40% lower, 30% lower, 20% lower, or 10% lower, than a compression set of a foamed article made by a same method but without the thermoset polyurethane polymer. A compression set is the measurement of a foam's ability to return to its original thickness after being subjected to a compressive force or load over a given period of time. ASTM 1056 or ASTM D395 may be used to measure compression set.

In some embodiments, the resiliency of the foamed article is 0-100% larger, preferably 90% larger, 80% larger, 70% larger, 60% larger, 50% larger, 40% larger, 30% larger, 20% larger, or 10% larger, than a resiliency of a foamed article made by a same method but without the thermoset polyurethane polymer. Resiliency is an indicator of the surface elasticity and is commonly measured by dropping a standard steel ball onto the foam from a given height and measuring what percentage the ball rebounds.

In some embodiments, the elongation at break (ASTM D638) of the foamed article is 0-100% larger, preferably 90% larger, 80% larger, 70% larger, 60% larger, 50% larger, 40% larger, 30% larger, 20% larger, or 10% larger, than an elongation at break of a foamed article made by a same method but without the thermoset polyurethane polymer. The elongation at break is a measurement of how long the foam can stretch before breaking when pulled from both ends.

In some embodiments, a tensile strength (ASTM D638) of the foamed article is 0-100% larger, preferably 90% larger, 80% larger, 70% larger, 60% larger, 50% larger, 40% larger, 30% larger, 20% larger, or 10% larger, than a tensile strength of a foamed article made by a same method but without the thermoset polyurethane polymer. The tensile strength is a measure of the foam's ability to resist breaking under pressure.

### EXAMPLES

A series of foamed compositions were prepared to demonstrate the effect of different amounts of PU and different compatibilizers. Foamed materials were prepared by mixing an EVA copolymer and PU particles in different amounts of 5%, 10% and 20% percent by weight based on the total weight of the EVA copolymer and the PU particles. Standard foam made from the same EVA copolymer was provided as a control example. Samples that contain a compatibilizer were prepared by first mixing the PU particles with the compatibilizer then further mixing the resultant material with the EVA copolymer. The resultant mixtures were then foamed (e.g., under compression molding at 170-185°C for 5-10 minutes, preferably 178°C for 7 minutes). The properties of the respective samples are provided in Table 1 below. The expansion factor, hardness and tear resistance from the standard foam may be used as a reference. When the expansion factor increases, it is due to interactions from the additional components (e.g., PU scrap and/or compatibilizer) with the crosslinking and expansion agents. Higher expansion typically lowers the hardness. Outstanding results are associated with compositions that kept a similar expansion and hardness, but increased tear strength. Samples containing X-17, 6106 and 9900 have shown improved tear resistance, showing the improvement in mechanical properties when compared to the standard foam, and even better when compared to the samples with PU scraps that have not used a compatibilizer in their formulations (all lower tear resistance, when no compatibilizer is used).

**Table 1: Foamed article properties.**

| **Sample** | **Expansion Factor** | **Asker C** | **Tear Test (kN/m)** |
|---|---|---|---|
| Standard Foam | 1.67 | 41.9 | 5.69 |
| EVA\|PU\| 5% | 1.80 | 33.1 | 5.12 |
| EVA\|PU\| 10% | 1.79 | 36.4 | 5.23 |
| EVA\|PU\| 20% | 1.78 | 34.4 | 5.40 |
| EVA\|PU\| 20% + COMP-A(X17) | 1.72 | 35.1 | 6.00 |
| EVA\|PU\| 20% + COMP-6106 | 1.68 | 42.1 | 6.10 |
| EVA\|PU\| 20% + COMP-D(9900) | 1.62 | 43.8 | 7.05 |
| EVA\|PU\| 20% + COMP-B(2234) | 1.80 | 33.8 | 5.36 |
| EVA\|PU\| 20% + COMP-C(2246) | 1.81 | 34.0 | 5.50 |

| | | | |
|---|---|---|---|
| Expansion factor was measured according to the size increase relative to the mold size (A 10 cm square mark in the mold marks the sample. The sample is measured after foaming: sample is cooled down for a minimum of 24 hours and the mold mark is measured. If the size of the mark became 15 cm, then the expansion ratio was 1.5). Hardness Asker C was measured according to Asker C Standard (JIS K7312 and SRIS 0101). Tear strength properties were measured according to ASTM D624-00 (2020). | | | |

Experimental formulations include those described below in Table 2.

**Table 2: Foamed Compositions.**

| **Formulation** in **phr** | **Formulation Standard EVA 6022 CO** | WP1-**PU20-COMP-A(X17)** | **WP1-PU20-COMP-B(2234)** | **WP1-PU20-COMP-C(2246)** | **WP1-PU20-COMP-D(9900)** | **WP1-PU20-COMP-6106** |
|---|---|---|---|---|---|---|
| EVA | 100 | 90.1 | 90.1 | 90.1 | 90.1 | 90.1 |
| EVA in PU MB (33%) | 0 | 9.9 | 9.9 | 9.9 | 9.9 | 9.9 |
| Calcium Carbonate | 10 | 10 | 10 | 10 | 10 | 10 |
| PU+EVA Masterbatch | 0 | 30 | 30 | 30 | 30 | 30 |
| Zinc Oxide | 0.75 | 0.75 | 0.75 | 0.75 | 0.75 | 0.75 |
| Zinc Stearate | 0.75 | 0.75 | 0.75 | 0.75 | 0.75 | 0.75 |
| Compatibilizer | | 1 | 1 | 1 | 1 | 1 |
| Azodicarbonamide | 2.80 | 2.80 | 2.80 | 2.80 | 2.80 | 2.80 |
| DCP | 0.65 | 0.70 | 0.70 | 0.70 | 0.70 | 0.70 |
| Total (phr) | 114.95 | 136.1 | 136.1 | 136.1 | 136.1 | 136.1 |
| | Effective PU MB | 15 | 15 | 15 | 15 | 15 |

Table 3 below provides a comparison of the properties of the EVA/PU foamed articles with a foamed article made with the same EVA copolymer but without PU particles and without compatibilizer (standard foam). Surprisingly, foamed materials containing 20 wt.% of PU in combination with certain compatibilizers provided substantially improved tear test results.

**Table 3: Improvement vs. standard foam.**

| **IMPROVEMENT** | **Expansion Factor** | **Asker C** | **Tear Strength** |
|---|---|---|---|
| EVA\|PU\| 5% | 7.8% | -21.0% | -10.0% |
| EVA\|PU\| 10% | 7.2% | -13.1% | -8.1% |
| EVA\|PU\| 20% | 6.6% | -17.8% | -5.1% |
| EVA\|PU\| 20% + COMP-A (X17) | 3.0% | -16.2% | 5.4% |
| EVA\|PU\| 20% + COMP-6106 | 0.3% | 0.6% | 7.2% |
| EVA\|PU\| 20% + COMP-D (9900) | -3.0% | 4.5% | 23.9% |
| EVA\|PU\| 20% + COMP-B (2234) | 7.5% | -19.3% | -5.8% |
| EVA\|PU\| 20% + COMP-C (2246) | 8.4% | -18.8% | -3.3% |

Various components used in the examples are described in Table 4.

**Table 4: Exemplary components of example compositions.**

| **Sample** | **Name** | **Structure** | **Expansion Factor** | **Asker C** | **Tear Strength** |
|---|---|---|---|---|---|
| EVA 6022 | Sipchem EVA 6022 CO | Poly(ethylene vinyl acetate) copolymer with 22% VA content, and MFI of 6.0 (g/10min) | | | |
| | | A range of EVA grades can be used in foaming (from 0% to 33%) and MFI from 1 to 150 g/10 min. | | | |
| | | Higher value MFI grades preferably used in less quantities, preferred grades have VA content between 14 and 28%, and MFI from 2 to 25, preferably from 2.5 to 7 g/10 min. | | | |
| | | Suitable Sipchem EVA grades include EVA 2014, EVA 2518, EVA 3522, EVA 6022. | | | |
| Thermoset Polyuretha ne Elastomer | BASF Elastopan + Lupranate + Lupraphen | Examples Lupraphen 2605/1, e.g., a glycerine branched, polydiethylene adipate with a molecular weight of 2,600. | 1.67 | 41.9 | 5.69 |
| | | ELASTOPAN ES 7309/159 Contains catalyst, additives, and ethane-1,2-diol Aromatic Isocyanate MDI based Lupranate ES 187/26 C-B TDI based and aliphatic isocyanates may provide advantageous coverage. Particle size of the samples: 20 - 300 um | | | |
| EVA\|PU\| 5% | | | 1.80 | 33.1 | 5.12 |
| EVA\|PU\| 10% | | | 1.79 | 36.4 | 5.23 |
| EVA\|PU\| 20% | | | 1.78 | 34.4 | 5.40 |
| EVA\|PU\| 20% + COMP-A(X17) | Croda Rheoptima X17-PA | Emulsifier and Rheology modifier | 1.72 | 35.1 | 6.00 |
| | | Rheoptima X17, vegetable derived polymer | | | |
| EVA\|PU\| 20% + COMP-6106 | Croda MAXEMU L 6106 | Oleth-2 phosphate 39464-69-2 Phosphate ester anionic surfactant | 1.68 | 42.1 | 6.10 |
| | | 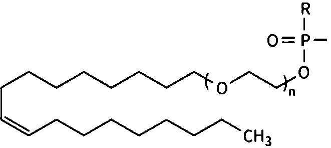 Non-migratory surfactant: | | | |
| | | Reactive Surfactant | | | |
| EVA\|PU\| 20% + COMP-D(9900) | Croda ZEPHRY M PD 9900 | Croda Blend; non-ionic polymer | 1.62 | 43.8 | 7.05 |
| EVA\|PU\| 20% + COMP-B(2234) | Croda ZEPHRY M PD 2234-NV-LQ | Croda Polymer, Emulsifier; non-ionic polymer | 1.80 | 33.8 | 5.36 |
| EVA\|PU\| 20% + COMP-C(2246) | Croda ZEPHRY M PD-2246-SO | Polymer, Emulsifier; non-ionic | 1.81 | 34.0 | 5.50 |

Numerous modifications and variations of the present disclosure are possible in light of the above teachings. It is, therefore, to be understood that within the scope of the appended claims, the invention may be practiced otherwise than as specifically described herein.

## Claims

1. A method of making a foamed article, comprising:
mixing a first ethylene vinyl acetate (EVA) copolymer and a thermoset polyurethane to form a composite;
mixing the composite, a second EVA copolymer, a compatibilizer, and a foaming agent to form a mixture; and
forming the foamed article from the mixture,
wherein a compression set of the foamed article is 0-100% lower than a compression set of a foamed article made by a same method but without the thermoset polyurethane polymer.

2. The method of claim 1, further comprising, processing the thermoset polyurethane polymer prior to the mixing with the first EVA copolymer by at least one of mechanical grinding, cryogenic grinding, and waterjet powdering.

3. The method of claim 1, further comprising, processing the thermoset polyurethane polymer prior to the mixing with the first EVA copolymer by at least one of two-roll milling, kneading, and homogenizing in a Banbury mixer.

4. The method of any one of claims 1 to 3, wherein a particle size of the thermoset polyurethane polymer is less than 5 mm.

5. The method of any one of claims 1 to 4, wherein the thermoset polyurethane polymer is a flexible crosslinked polyurethane foam.

6. The method of any one of claims 1 to 5, wherein the mixture comprises 1-60 parts of the composite relative to 100 parts of the second EVA copolymer.

7. The method of any one of claims 1 to 6, wherein the compatibilizer is at least one selected from the group consisting of a grafted polyolefin and a styrenic block copolymer.

8. The method of any one of claims 1 to 7, wherein the mixture comprises 1-30 parts of the compatibilizer relative to 100 parts of the second EVA copolymer.

9. The method of any one of claims 1 to 8, wherein the mixture further comprises a reactive surfactant.

10. The method of any one of claims 1 to 9, wherein the first EVA copolymer has a molecular weight of 500-3,000 g/mol and a vinyl acetate content of 30 to 45 wt %, based on a total weight of the second EVA copolymer.

11. The method of claim 10, wherein the second EVA copolymer has a molecular weight of 40,000-70,000 g/mol and a vinyl acetate content of 15 to 30 wt %, based on a total weight of the second EVA copolymer.

12. The method of claim 11, wherein the composite comprises 1-50 parts of the first EVA copolymer, relative to 100 parts of the thermoset polyurethane.

13. The method of any one of claims 1 to 12, wherein the forming is by at least one of injection molding and compression molding.

14. The method of any one of claims 1 to 13, wherein the thermoset polyurethane polymer forms a co-continuous polymer phase with the second EVA copolymer in the foamed article.

15. The method of any one of claims 1 to 14, further comprising heating the mixture to a temperature at which the second EVA copolymer melts and the foaming agent decomposes thereby producing a foam.

16. The method of any one of claims 1 to 15, wherein the thermoset polyurethane polymer is waste from injection molding processes.

17. The method of any one of claims 1 to 16, wherein a resiliency of the foamed article is 0-100% larger than a resiliency of a foamed article made by a same method but without the thermoset polyurethane polymer.

18. The method of any one of claims 1 to 17, wherein an elongation at break of the foamed article is 0-100% larger than an elongation at break of a foamed article made by a same method but without the thermoset polyurethane polymer.

19. A foamed article produced by the method of any one of claims 1 to 18.
